# EUROPÄISCHE PATENTSCHRIFT

(11) **EP 1 154 307 B1**
(45) Veröffentlichungstag und Bekanntmachung des Hinweises auf die Patenterteilung: **31.08.2005**
(21) Anmeldenummer: 01107433.3
(22) Anmeldetag: 27.03.2001
(51) Int. Cl.: G02F 1/1337

(54) **Verfahren zur Darstellung von Abbildungen auf einer Flüssigkristallzelle**
Method for producing images with a liquid-crystal cell
Méthode de reproduction d' images utilisant une cellule à cristaux liquides

(30) Priorität: 11.05.2000 DE 10022630
(43) Veröffentlichungstag der Anmeldung: 14.11.2001
(73) Patentinhaber: SIEMENS AKTIENGESELLSCHAFT, 80333 München (DE)
(72) Erfinder: Brandt, Peter, 63739 Aschaffenburg (DE)

(56) Entgegenhaltungen:
- US-A- 5 936 596
- PATENT ABSTRACTS OF JAPAN vol. 1995, no. 11, 26. Dezember 1995 (1995-12-26) -& JP 07 199143 A (TOSHIBA CORP), 4. August 1995 (1995-08-04)
- LEE S H ET AL: "DUAL DOMAINLIKE, VERTICALLY ALIGNED NEMATIC LIQUID CRYSTAL DISPLAY DRIVEN BY IN-PLANE FIELD" IEICE TRANSACTIONS ON ELECTRONICS, INSTITUTE OF ELECTRONICS INFORMATION AND COMM. ENG. TOKYO, JP, Bd. E81-C, Nr. 11, November 1998 (1998-11), Seiten 1681-1684, XP000875136 ISSN: 0916-8524
- PATENT ABSTRACTS OF JAPAN vol. 1997, no. 08, 29. August 1997 (1997-08-29) -& JP 09 105908 A (HITACHI LTD), 22. April 1997 (1997-04-22)

## Beschreibung

Die Erfindung betrifft ein Verfahren zur Darstellung von Abbildungen auf einer Flüssigkristallzelle, insbesondere in einem Kraftfahrzeug, welche Flüssigkristallzelle eine Vielzahl von separat ansteuerbaren Elektrodensegmenten hat und bei dem zwei Gruppen von Abbildungen unterschiedlichen, sich nicht überlappenden Winkelbereichen zugeordnet werden, innerhalb der sie sichtbar sind, wobei eine Flüssigkristallzelle verwendet wird, bei der sich für aneinandergrenzende Elektrodensegmente eine unterschiedliche Ausrichtung der Kristallmoleküle und damit eine unterschiedliche Bildschärfe für unterschiedliche Blickwinkel ergibt, wobei zum Zuordnen von Abbildungen einem jeweils gewünschten Blickwinkelbereich der Erkennbarkeit einer Abbildung die hierzu erforderlichen Elektrodensegmente angesteuert werden.

Flüssigkristallanzeigen können so gestaltet sein, dass die jeweiligen Abbildungen nur aus einem bestimmten Blickwinkel erkennbar, aus einem anderen Blickwinkel jedoch unsichtbar sind. Das ermöglicht es beispielsweise, eine Flüssigkristallanzeige im Kraftfahrzeug zwischen dem Fahrer und dem Beifahrer anzuordnen und beispielsweise ein Fernsehprogramm nur für den Beifahrer erkennbar werden zu lassen, so dass der Fahrer dadurch nicht abgelenkt wird. Andere Bilder, beispielsweise eine Straßenkarte oder Warnhinweise, können so wiedergegeben werden, dass sie für beide oder auch nur für den Fahrer sichtbar sind.

Zur Verwirklichung solcher "Dual View Displays" ist es bekannt, über eine Flüssigkristallzelle eine zweite Flüssigkristallzelle anzuordnen, welche die Richtung des von der ersten Flüssigkristallzelle abgestrahlten Lichtes je nach Schaltstellung in zwei unterschiedliche Richtungen auszurichten vermag. Ebenfalls bekannt sind umschaltbare Jalousiefolien, mit denen je nach Schaltstellung verschiedene Bereiche des Bildes abgedeckt werden. Die bekannten Mittel zur Erzeugung des Dual-View-Effektes sind jedoch relativ aufwendig.

Es sind auch schon Flüssigkristallzellen unter der Bezeichnung MVA (Multi-Domain + Vertical Alignment) bekannt. Sie werden eingesetzt, um den Blickwinkelbereich, innerhalb welchem ein ausreichend kontrastreiches Bild zu erkennen ist, deutlich zu vergrößern. Hierzu sind die für eine kontrastreiche Erkennbarkeit notwendigen Winkelbereiche benachbarter Bildpunkte unterschiedlich, so dass man aus unterschiedlichen Blickrichtungen zwar nicht jeweils alle Bildpunkte, jedoch immer eine ausreichende Anzahl von Bildpunkten für ein vollständiges Bild sieht. Ähnliche Effekte kann man mit der IPS-Technologie (In Plane Switching) erreichen.

Aus der japanischen Patentschrift JP 07199143 A2 ist eine Flüssigkristallanzeige bekannt, deren Bildpunkte in Unterbildpunkte unterteilt sind, die jeweils unterschiedlichen Winkelbereichen der Wahrnehmung zugeordnet sind. Auf diese Weise ist eine gleichzeitige Darstellung verschiedener Bilder möglich, die in unterschiedlichen Winkelbereichen vorzugsweise zur Darstellung stereoskopischer Bilder wahrnehmbar sind. Ein entscheidender Nachteil dieser Anordnung liegt in dem Erfordernis der mindestens doppelten Bildpunktdichte zur Darstellung der einfachen Auflösung.

Der Erfindung liegt das Problem zugrunde, ein Verfahren der eingangs genannten Art so zu gestalten, dass auf möglichst einfache Weise mit einer Flüssigkristallzelle für unterschiedliche Blickwinkel unterschiedliche Abbildungen erzeugt werden können.

Dieses Problem wird erfindungsgemäß mittels eines Verfahrens der eingangs genannten Art gelöst, welches vorsieht, dass im Zeitmultiplexverfahren rasch aufeinander folgend die schaltbaren Elektrodensegmente für den einen oder anderen Winkelbereich angesteuert werden.

Gemäß der Erfindung werden Flüssigkristallzellen mit aus unterschiedlichen Blickrichtungen sichtbaren Bildpunkten nicht wie beim Stand der Technik dazu verwendet, den Blickwinkelbereich zu vergrößern, sondern für unterschiedliche Blickwinkel unterschiedliche Bilder darzustellen. Dadurch lässt sich der Double-View-Effekt wesentlich kostengünstiger erzielen als mit den bekannten Mitteln, weil keine zweite Flüssigkristallzelle zur Ausrichtung des abgestrahlten Lichtes und keine umsteuerbare Jalousiefolie zur Abdeckung von Bereichen der Displayfläche erforderlich wird.

Durch Ansteuern einzelner Elektrodensegmente separat erzeugbare Bildpunkte, bei denen die einen ausschließlich in einem bestimmten Blickwinkelbereich und andere in einem anderen Blickwinkelbereich erkennbar sind, können auf verschiedene Weise verwirklicht werden. Eine vorteilhafte Methode besteht darin, dass eine Flüssigkristallzelle mit unterschiedlichen Domainen (MVA-Technologie) verwendet wird, so dass sich für unterschiedliche, schaltbare Elektrodensegmente eine unterschiedliche Ausrichtung der Flüssigkristallmoleküle ergibt.

Alternativ ist es jedoch auch möglich, dass eine Flüssigkristallzelle mit IPS-Technologei (In Plane Switching) verwendet wird, so dass sich für unterschiedliche, schaltbare Elektrodensegmente eine unterschiedliche Ausrichtung der Flüssigkristallmoleküle ergibt.

Man könnte auf einem Display zeitlich versetzt für den einen oder anderen Betrachter unterschiedliche Abbildungen darstellen. Es ist jedoch auch eine gleichzeitige Darstellung unterschiedlicher Abbildungen für mit unterschiedlichem Blickwinkel das Display betrachtende Personen möglich, wenn gemäß einer vorteilhaften Weiterbildung des erfindungsgemäßen Verfahrens im Zeitmultiplexverfahren rasch aufeinanderfolgend die schaltbaren Segmente für den einen oder anderen Winkelbereich angesteuert werden. Auf diese Weise könnte man zum Beispiel zwei verschiedene Fernsehprogramme gleichzeitig für zwei nebeneinander sitzende Personen auf einem einzigen Bildschirm erscheinen lassen.

Da der gegenseitige Abstand von zwei nebeneinander sitzenden und gleichzeitig das Display betrachtenden Personen unterschiedlich sein kann, ist es wünschenswert, wenn sich die Winkelbereiche, innerhalb der eine kontrastreiche Wiedergabe der jeweiligen Abbildung erfolgt, verstellen lassen. Das lässt sich mit einfachen Mitteln verwirklichen, wenn gemäß einer anderen Weiterbildung des erfindungsgemäßen Verfahrens zur Justage der Kontrastkurven für zwei Winkelbereiche Mittel zum Verstellen der Ansteuerspannungen durch die Benutzer der Flüssigkristallzelle vorgesehen sind.

Die Erfindung lässt verschiedene Ausführungsformen zu. Zur weiteren Verdeutlichung ist ein Display schematisch dargestellt und wird nachfolgend beschrieben.

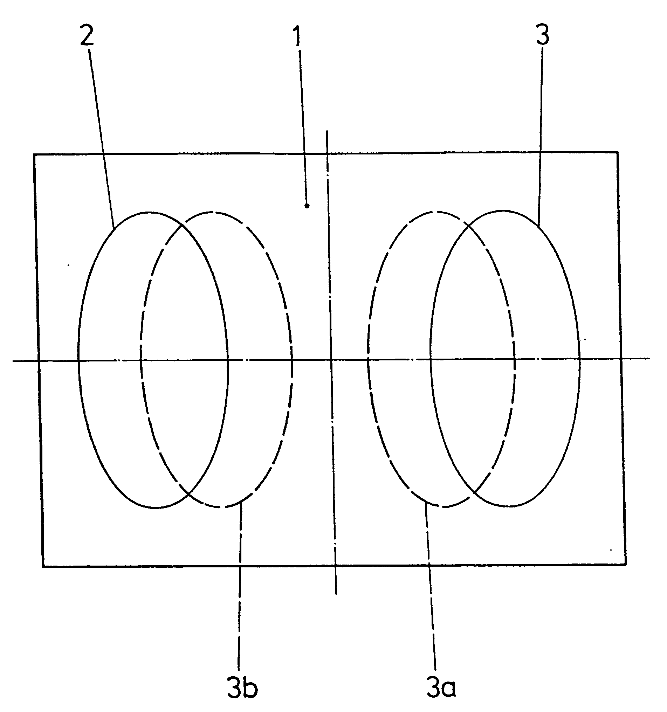

Die Zeichnung zeigt ein aus einer Flüssigkristallzelle 1 gebildetes Display, welches sowohl von einer rechts zur Displaymitte als auch von einer links zur Displaymitte sitzenden Person abgelesen werden soll. Symmetrisch zur Mittellinie der Flüssigkristallzelle 1 wurden zwei Isokontrastlinien 2, 3 eingezeichnet. Die linke Isokontrastlinie 2 grenzt für eine links sitzende Person den Bereich der Flüssigkristallzelle 1 ab, in welchem der Kontrast noch beispielsweise bei 10:1 liegt. Die rechte Isokontrastlinie 3 gilt entsprechend für eine rechts sitzende Person. Das jeweilige Bild für die beiden Personen fällt hinsichtlich des Kontrastes außerhalb der Isokontrastlinien 2, 3 so stark ab, dass jede Person immer nur das ihr zugeordnete Bild sieht.

Gestrichelt eingezeichnet wurde jeweils zur Mitte der Flüssigkristallzelle 1 hin versetzt eine zweite Isokontrastlinie 3a, 3b. Diese ergeben sich bei einer geänderten Ansteuerspannung. Deshalb wird es möglich, den Bereich größten Kontrastes durch Verstellen der Ansteuerspannung mehr oder weniger zu einer Seite hin zu verschieben.

## Patentansprüche

1. Verfahren zur Darstellung von Abbildungen auf einer Flüssigkristallzelle, insbesondere in einem Kraftfahrzeug, welche Flüssigkristallzelle eine Vielzahl von separat ansteuerbaren Elektrodensegmenten hat und bei dem zwei Gruppen von Abbildungen unterschiedlichen, sich nicht überlappenden Winkelbereichen zugeordnet werden, innerhalb der sie sichtbar sind, wobei eine Flüssigkristallzelle verwendet wird, bei der sich für aneinandergrenzende Elektrodensegmente eine unterschiedliche Ausrichtung der Kristallmoleküle und damit eine unterschiedliche Bildschärfe für unterschiedliche Blickwinkel ergibt, wobei zum Zuordnen von Abbildungen einem jeweils gewünschten Blickwinkelbereich der Erkennbarkeit einer Abbildung die hierzu erforderlichen Elektrodensegmente angesteuert werden, **dadurch gekennzeichnet, dass** im Zeitmultiplexverfahren rasch aufeinander folgend die schaltbaren Elektrodensegmente für den einen oder anderen Winkelbereich angesteuert werden.

2. Verfahren nach Anspruch 1, **dadurch gekennzeichnet, dass** eine Flüssigkristallzelle mit unterschiedlichen Domainen (MVA-Technologie) verwendet wird, so dass sich für unterschiedliche, schaltbare Elektrodensegmente eine unterschiedliche Ausrichtung der Flüssigkristallmoleküle ergibt.

3. Verfahren nach Anspruch 1, **dadurch gekennzeichnet, dass** eine Flüssigkristallzelle mit IPS-Technologie (In Plane Switching) verwendet wird, so dass sich für unterschiedliche, schaltbare Elektrodensegmente eine unterschiedliche Ausrichtung der Flüssigkristallmoleküle ergibt.

4. Verfahren nach zumindest einem der vorangehenden Ansprüche, **dadurch gekennzeichnet, dass** zur Justage der Kontrastkurven für zwei Winkelbereiche Mittel zum Verstellen der Ansteuerspannungen durch die Benutzer der Flüssigkristallzelle vorgesehen sind.

## Revendications

1. Procédé permettant de représenter des images sur une cellule à cristaux liquides, notamment dans un véhicule automobile, cette cellule à cristaux liquides ayant une pluralité de segments d'électrodes pouvant être excités séparément et dans lequel deux groupes d'images peuvent être affectés à des zones différentes d'angle de vision, qui ne se chevauchent pas et à l'intérieur desquelles les images sont visibles, où on utilise une cellule à cristaux liquides dans laquelle, pour des segments d'électrodes voisins, il se produit une orientation différente des molécules des cristaux et, ainsi, une netteté d'image différente pour des angles de vision différents, où, pour l'affectation d'images à chaque zone d'angle de vision souhaitée pour la reconnaissance d'une image, les segments d'électrode nécessaires à cet effet sont excités, **caractérisé par le fait que** les segments d'électrodes commutables pour l'une ou l'autre zone d'angle de vision sont excités rapidement l'un après l'autre en procédé à multiplexage temporel.

2. Procédé selon la revendication 1 **caractérisé par le fait qu'**on utilise une cellule à cristaux liquides ayant des domaines différents (technologie MVA), si bien que, pour différents segments d'électrodes commutables, on obtient une orientation différente des molécules des cristaux liquides.

3. Procédé selon la revendication 1 **caractérisé par le fait qu'**on utilise une cellule à cristaux liquides en technologie IPS (In Plane Switching), si bien que, pour différents segments d'électrodes commutables, on obtient une orientation différente des molécules des cristaux liquides.

4. Procédé selon au moins l'une des revendications précédentes **caractérisé par le fait que**, pour le calibrage des courbes de contraste pour deux zones d'angle de vision, il est prévu des moyens permettant aux utilisateurs de la cellule à cristaux liquides de régler les tensions d'excitation.

## Claims

1. Method for representing images on a liquid crystal cell, in particular in a motor vehicle, which liquid crystal cell has a multiplicity of electrode segments that can be driven separately, and in which two groups of images are assigned to different, non-overlapping angular ranges within which they are visible, use being made of a liquid crystal cell which, for mutually adjoining electrode segments, results in a different orientation of the crystal molecules and thus a different image sharpness for different viewing angles, in which case, in order to assign images to a respectively desired viewing angle range of discernability of an image, the electrode segments required for this purpose are driven, **characterized in that**, in the time division multiplex method, the switchable electrode segments are driven rapidly in succession for one angular range or another.

2. Method according to Claim 1, **characterized in that** use is made of a liquid crystal cell with different domains (MVA technology), so that a different orientation of the liquid crystal molecules results for different, switchable electrode segments.

3. Method according to Claim 1, **characterized in that** use is made of a liquid crystal cell with IPS technology (In Plane switching), so that a different orientation of the liquid crystal molecules results for different, switchable electrode segments.

4. Method according to at least one of the preceding claims, **characterized in that**, in order to adjust the contrast curves for two angular ranges, provision is made of means for adjustment of the drive voltages by the users of the liquid crystal cell.
